# EUROPÄISCHE PATENTANMELDUNG

(11) **EP 4 623 671 A1**
(43) Veröffentlichungstag der Anmeldung: **01.10.2025**
(21) Anmeldenummer: 25165197.2
(22) Anmeldetag: 21.03.2025
(51) Int. Cl.: A01G 9/033, A01G 25/00, E03F 5/10, E04D 13/04, E03B 3/02

(54) **NIEDERSCHLAGSMANAGEMENT-SYSTEM UND -VERFAHREN**

(30) Priorität: 28.03.2024 DE 102024108980
(71) Anmelder: Optigrün international AG, 72505 Krauchenwies-Göggingen (DE)
(72) Erfinder: GÖSSNER, Dominik, 72505 Krauchenwies-Göggingen (DE)
(74) Vertreter: Maiwald GmbH

(57) **Zusammenfassung**

Die Erfindung betrifft ein Niederschlagsmanagement-System (1), umfassend
- einen ersten, zweiten und dritten Wasserspeicher (W1, W2, W3),
- ein Retentionsdach (2), das einen mehrschichtigen Aufbau aufweist, wobei eine der Schichten eine wasserführende Schicht (20) ist, welche den ersten Wasserspeicher (W1) bildet,
- Rohrleitungen (3, 4) mit einer geschlossenen Rohrwandung (30), welche die drei Wasserspeicher (W1, W2, W3) derart miteinander verbinden, dass Wasser aus jedem der drei Wasserspeicher (W1, W2, W3) über die jeweiligen Rohrleitungen (3, 4) den jeweiligen beiden anderen Wasserspeichern zugeführt werden kann,
- wenigstens eine Pumpe (5, 5', 5"), welche dazu angeordnet und ausgebildet ist, Wasser durch wenigstens eine der Rohrleitungen (3, 4) zu pumpen, sowie
- eine Steuervorrichtung (6) zum Steuern des Wasserflusses im Niederschlagsmanagement-System (1).

Die Erfindung betrifft weiter ein Verfahren zum Betreiben eines solchen Niederschlagsmanagement-Systems (1), worin die Steuervorrichtung (6) den Wasserfluss im Niederschlagsmanagement-System (1) unter Berücksichtigung von Wetterprognosedaten und/oder Messergebnissen wenigstens eines der Sensoren (S1 bis S5) steuert.

## Beschreibung

### TECHNISCHES GEBIET

Die Erfindung betrifft ein Niederschlagsmanagement-System, welches ein Retentionsdach umfasst, das einen mehrschichtigen Aufbau aufweist, wobei eine der Schichten eine wasserführende Schicht ist. Diese wasserführende Schicht bildet einen von mindestens drei Wasserspeichern des Systems. Zum System gehören außerdem Rohrleitungen, welche die Wasserspeicher miteinander verbinden, sowie wenigstens eine Pumpe zum Pumpen von Wasser durch wenigstens eine der Rohrleitungen. Eine Steuervorrichtung steuert den Wasserfluss im erfindungsgemäßen Niederschlagsmanagement-System. Die Erfindung betrifft außerdem ein Verfahren zum Steuern eines solchen Niederschlagsmanagement-Systems.

### HINTERGRUND DER ERFINDUNG

In jüngster Zeit werden Dachbegrünungen und Verkehrsdächer nicht mehr nur zur statischen Aufnahme und Rückhaltung von Niederschlägen eingesetzt, sondern zunehmend zum aktiven Management der Niederschläge. Dabei wird der aufgefangene Niederschlag beispielsweise computergesteuert mittels regelbarer Abflüsse und/oder steuerbarer Pumpen weiter verteilt, wobei klimatische Einflüsse berücksichtigt und vorgegebene Wasserbilanzen erzielt werden können, wie dies zum Beispiel in der EP 3202995 A1 und EP 3757300 A1 der Anmelderin beschrieben ist. Die in diesem Zusammenhang eingesetzten Dachbegrünungen weisen in der Regel einen vielschichtigen Dachbegrünungsaufbau auf, der eine wasserführende Schicht umfasst. Gleiches gilt für Verkehrsdächer, bei denen anstelle einer oberen, bepflanzten Schicht ein begeh- oder befahrbarer Belag vorhanden ist. Häufig finden sich auch Dächer, die neben bepflanzten Bereichen begeh- oder befahrbare Bereiche aufweisen. Derartige Dächer, in denen Wasser in einer wasserführenden Schicht aufgenommen werden kann, werden häufig als Retentionsdächer bezeichnet. Diese Retentionsdächer enthalten ein Traggerüst, das den Hohlraum definiert, in dem das Wasser der wasserführenden Schicht aufgenommen werden kann. Derartige Traggerüste werden häufig von einer Vielzahl nebeneinander angeordneter kistenförmiger Bauelemente gebildet, die unter der Bezeichnung Wasser-Retentionsboxen bekannt sind. Im Rahmen dieser Anmeldung kann das Retentionsdach, das Teil des Niederschlagsmanagement-Systems ist, grundsätzlich jeden beliebigen Schichtaufbau besitzen, bei dem eine der Schichten eine wasserführende Schicht ist, unabhängig davon, ob sich diese über die gesamte Dachfläche oder nur einen Teil derselben erstreckt, und unabhängig davon, wie viele und welche Arten von Schichten sich oberhalb und unterhalb der wasserführenden Schicht befinden und für welche Verwendung diese vorgesehen sind. Auch hier kann der Schichtaufbau in verschiedenen Teilbereichen der Dachfläche unterschiedlich ausgebildet sein.

Ein Ziel, welches mithilfe solcher Niederschlagsmanagement-Systeme erreicht werden soll, besteht darin, den im Einzugsbereich des Systems aufgefangenen Niederschlag möglichst lange im System zu halten, um auf diese Weise eine Überlastung der Kanalisation zu vermeiden. Ideal wäre es, vom Niederschlagsmanagement-System aufgenommene Niederschläge möglichst gar nicht in die Kanalisation abgeben zu müssen. Dies zu realisieren, ist allerdings oft nicht einfach, da zur Aufnahme der infolge des Klimawandels immer häufiger auftretenden Starkregenfälle eine große Speicherkapazität erforderlich ist. Von der wasserführenden Schicht eines Retentionsdaches kann diese Speicherkapazität in aller Regel nicht bereitgestellt werden, da weder die Flächenausdehnung noch die Höhe der wasserführenden Schicht beliebig vergrößert werden können. In jüngster Zeit wird der Wasserspeicher eines Retentionsdaches in Form eines Grün- oder Kiesdaches daher häufig mit anderen Wasserspeichern kombiniert und zu einem Speichersystem zusammengeschlossen, um die Aufnahmekapazität für Niederschläge zu erhöhen. Entsprechende Systeme sind zum Beispiel bereits in der EP 3 757 300 A1 der Anmelderin beschrieben. Konkret wird in dieser Druckschrift beispielsweise die Kombination eines begrünten Daches mit wasserführender Schicht, eines weiteren Retentionsdaches in Form eines Tiefgaragendaches sowie einer Rigole beschrieben. Die wasserführende Schicht des Tiefgaragendaches dient als zusätzlicher Speicher, in dem Niederschlag, der in der wasserführenden Schicht des Gründaches nicht mehr aufgenommen werden kann, gespeichert wird. Niederschlag, der auch dort keinen Platz mehr findet oder der zur Einhaltung einer vorgegebenen Wasserbilanz versickert werden soll, wird der Rigole zugeführt, von wo Wasser ins Erdreich versickert wird.

Grundsätzlich ermöglichen die in der EP 3757300 A1 beschriebenen Systeme ein deutlich flexibleres Wassermanagement mit deutlich erhöhter Speicherkapazität. Ein System, welches gänzlich ohne Versickerung von Wasser oder Abgabe von Wasser in die Kanalisation auskommt, ohne eine sehr große Speicherkapazität zur Verfügung stellen zu müssen, die selbst extreme Starkregenfälle sicher aufnehmen kann, ist jedoch auch mit den dort beschriebenen Systemen nicht ohne weiteres möglich. Andererseits nehmen im Zuge des Klimawandels nicht nur Starkregenfälle zu, sondern Wetterextreme insgesamt, sodass es neben Niederschlagsperioden auch zu extremen Trockenperioden kommt. Auch in diesen Perioden muss das Niederschlagsmanagement-System in der Lage sein, ein Gründach als Bestandteil des Systems ausreichend mit Wasser versorgen und die Bepflanzung am Leben halten zu können.

Aufgabe der Erfindung ist es entsprechend, ein Niederschlagsmanagement-System der eingangs beschriebenen Art anzugeben, das ohne eine unnötige Erhöhung der Speicherkapazität ein flexibles Wassermanagement ermöglicht, das insbesondere in Starkregenperioden möglichst ohne Einleitung von Wasser in die Kanalisation auskommt und in Trockenperioden eine ausreichende Bewässerung der Bepflanzung eines Gründaches sicherstellen kann.

Die Lösung dieser Aufgabe gelingt mit dem Niederschlagsmanagement-System gemäß Anspruch 1 sowie dem Verfahren gemäß Anspruch 8. Bevorzugte Ausführungsformen und Verfahrensvarianten sind den jeweiligen abhängigen Ansprüchen zu entnehmen.

### ZUSAMMENFASSUNG DER ERFINDUNG

In einem ersten Aspekt betrifft die Erfindung konkret ein Niederschlagsmanagement-System, das einen ersten, zweiten und dritten Wasserspeicher umfasst. Weiter umfasst das System ein Retentionsdach, das einen mehrschichtigen Aufbau aufweist, wobei eine der Schichten eine wasserführende Schicht ist, welche den ersten Wasserspeicher bildet. Rohrleitungen mit geschlossener Rohrwandung verbinden die drei Wasserspeicher derart miteinander, dass Wasser aus jedem der drei Wasserspeicher über die jeweiligen Rohrleitungen den jeweiligen beiden anderen Wasserspeichern zugeführt werden kann. Wenigstens eine Pumpe ist dazu angeordnet und ausgebildet, Wasser durch wenigstens eine der Rohrleitungen zu pumpen. Zum Steuern des Wasserflusses im Niederschlagsmanagement-System ist schließlich noch eine Steuervorrichtung im System vorhanden.

Das erfindungsgemäße Niederschlagsmanagement-System, nachfolgend auch nur kurz "System" genannt, umfasst insgesamt mindestens drei Wasserspeicher, von denen einer, als erster Wasserspeicher bezeichnet, die wasserführende Schicht eines Retentionsdaches und bevorzugt eines begrünten Daches ist. Anstelle eines Gründaches kann es sich jedoch bei dem Retentionsdach um jedes beliebige andere Retentionsdach, unabhängig von dessen Schichtaufbau, handeln, solange es eine wasserführende Schicht aufweist, wie vorstehend bereits beschrieben. Die beiden anderen Wasserspeicher sind in ihrer Art nicht weiter beschränkt, jedoch handelt es sich grundsätzlich um Speicher, in denen Wasser dauerhaft gespeichert werden kann. In einer bevorzugten Variante ist der zweite Wasserspeicher eine wasserführende Schicht eines weiteren Retentionsdaches, welches bevorzugt tiefer liegt als das den ersten Wasserspeicher aufweisende Retentionsdach. Bei dem weiteren Retentionsdach kann es sich zum Beispiel um ein Tiefgaragendach handeln. Der dritte Wasserspeicher kann eine Zisterne sein, welche bevorzugt in den Boden eingelassen ist, sodass deren Bodenfläche unterhalb des Bodens des zweiten Wasserspeichers liegt.

Zusätzlich zu den drei ausdrücklich erwähnten Wasserspeichern kann eine beliebige Anzahl weiterer Wasserspeicher im System vorhanden sein. Als zusätzlicher Wasserspeicher könnte zum Beispiel eine Rigole oder ein anderer Versickerungsspeicher zum Einsatz kommen. Diese weiteren Wasserspeicher müssen - anders als erster, zweiter und dritter Wasserspeicher - nicht in der Weise über Rohrleitungen mit den anderen Wasserspeichern verbunden sein, dass Wasser aus jedem der Wasserspeicher allen anderen Wasserspeichern zugeführt werden kann. Es ist also beispielsweise möglich, einen zusätzlichen Wasserspeicher nur mit einer Rohrleitung als Zuleitung zu versehen, während keine Entnahmeleitung vorhanden ist, mit welcher Wasser aus dem zusätzlichen Wasserspeicher einem anderen Wasserspeicher im System zugeführt werden könnte. Stattdessen kann das Wasser entweder versickert werden, oder es kann beispielsweise eine Entnahmeleitung vorgesehen sein, mit welcher Wasser aus dem System herausgeführt werden kann, allerdings bevorzugt nicht in die Kanalisation, sondern zweckmäßig zu einem externen Verbraucher wie beispielsweise einem Brauchwasserspeicher eines Gebäudes oder einer Bewässerungszisterne. In einer Ausführungsform wird das System so betrieben, dass kein gezielter Abfluss von flüssigem Wasser stattfindet, sondern Wasserverluste aus dem System allein auf Verdunstung beruhen (die geringfügigen Verluste aufgrund von Leckagen nicht berücksichtigt).

Unter dem Merkmal, dass Wasser aus jedem der drei Wasserspeicher den jeweiligen beiden anderen Wasserspeichern zugeführt werden kann, ist im Rahmen dieser Erfindung nicht gemeint, dass Wasser aus einem der drei Wasserspeicher jedem der beiden anderen Wasserspeicher direkt zugeführt werden müsste. Dies ist zwar eine der Möglichkeiten, welche von diesem Merkmal umfasst sind, jedoch umfasst das Merkmal außerdem die Möglichkeit, dass die beiden Wasserspeicher, denen Wasser zugeführt werden soll, in Reihe hintereinandergeschaltet sind, sodass dem nachgeschalteten Wasserspeicher Wasser über den vorgeschalteten Wasserspeicher zugeführt wird. Die Zufuhr vom ersten zum letzten Wasserspeicher erfolgt also kaskadenartig über den mittleren Wasserspeicher. Der letzte Wasserspeicher in der Reihe kann dann wiederum eine Verbindung zum ersten Wasserspeicher der Kaskade aufweisen, sodass letztendlich alle drei Wasserspeicher miteinander über Rohrleitungen verbunden sind und Wasser über die Rohrleitungen zwischen ihnen transportiert werden kann. Diese kaskadenartige Anordnung erlaubt die Einsparung von Rohrleitungen zur Verbindung der drei Wasserspeicher. Sie eignet sich besonders zur Verbindung von Wasserspeichern, die nicht auf gleicher Höhe zueinander angeordnet sind. Die Rohrleitungen werden dann zweckmäßig so verlegt, dass sie den obersten mit dem nächst niedrigeren Wasserspeicher verbinden und letzteren wiederum mit dem am niedrigsten gelegenen Wasserspeicher. Zum Transport des Wassers in den Rohrleitungen ist dann nicht unbedingt eine Pumpe erforderlich (auch wenn dies möglich ist), sondern es reicht in der Regel aus, in den Rohrleitungen ein geeignetes Absperrmittel, bevorzugt in Form eines steuerbaren Kugelhahns oder Ventils, insbesondere eines Magnetventils, vorzusehen, mit dem der Wasserfluss in der Leitung gestartet oder gestoppt werden kann. Für den Rücktransport von Wasser aus dem am niedrigsten gelegenen Wasserspeicher und gegebenenfalls zusätzlich aus dem mittleren Wasserspeicher zum höchsten Wasserspeicher wird dann zweckmäßig eine Rohrleitung mit einer Pumpe eingesetzt.

Bei dieser Gelegenheit sei angemerkt, dass unter dem Begriff "Rohrleitung" im Rahmen dieser Erfindung grundsätzlich jeder langgestreckte Hohlkörper zu verstehen ist, der sich zum Fördern von Wasser eignet. "Rohrleitung" meint also nicht nur steife Rohre aus einem geeigneten Material wie Metall oder Kunststoff, sondern auch flexible Schläuche, die in der Regel aus Kunststoff bestehen werden, aber nicht müssen. Selbstverständlich können zur Überbrückung der Strecke von Wasserspeicher zu Wasserspeicher auch Kombinationen unterschiedlicher Komponenten und Materialien verwendet werden. Beispielsweise kann es sich anbieten, zumindest abschnittweise ein Schlauchstück zu verwenden, wenn es Krümmungen im Verlauf der Rohrleitung gibt, um die Verlegung und Montage zu erleichtern. Welche Art von Rohrleitung gewählt wird, richtet sich in an sich bekannter Weise nach der geplanten Verwendung, wobei insbesondere bei der Auswahl des Innendurchmessers die benötigte Förderleistung und bei Material und Wandstärke der erforderliche Förderdruck zu berücksichtigen sind. Die Verbindung der drei Wasserspeicher erfolgt erfindungsgemäß mit Rohrleitungen, deren Wandung geschlossen und wasserundurchlässig ist. Die Rohrwandung weist also keine Öffnungen auf, durch welche Wasser aus der Rohrleitung durch die Rohrwandung hindurch nach außen austreten könnte. Auf diese Weise kann ein praktisch verlustfreier Transport von Wasser von einem Wasserspeicher zum anderen sichergestellt werden.

Auch die übrigen Komponenten des erfindungsgemäßen Niederschlagsmanagement-Systems können grundsätzlich Komponenten des Standes der Technik entsprechen, die bereits für den gleichen Zweck eingesetzt wurden. Als Pumpe ist sowohl eine Tauchpumpe geeignet, die in das Wasser des Wasserspeichers eintaucht, als auch eine außerhalb des Wasserspeichers angeordnete Pumpe. Letztere hat in der Regel den Vorteil, dass sie in einer leichter zugänglichen Position aufgestellt und damit besser kontrolliert, gewartet und repariert werden kann.

In einer Ausführungsform der Erfindung sind also die drei Wasserspeicher des Systems in Reihe über je eine Rohrleitung miteinander verbunden sind, sodass Wasser aus dem ersten Wasserspeicher über den zweiten Wasserspeicher in den dritten Wasserspeicher gelangen kann, und eine mit einer Pumpe versehene Rohrleitung führt vom dritten Wasserspeicher zum ersten Wasserspeicher zurück. Bevorzugt sind dabei erster, zweiter und dritter Wasserspeicher auf unterschiedlichen Höhen zueinander angeordnet sind, wobei der am höchsten gelegene Wasserspeicher über eine erste Rohrleitung mit dem nächstniedrigeren Wasserspeicher und dieser mit dem am niedrigsten gelegenen Wasserspeicher über eine zweite Rohrleitung verbunden ist. Optional ist der am höchsten gelegene Wasserspeicher über eine dritte Rohrleitung direkt mit dem am niedrigsten gelegenen Wasserspeicher verbunden. Vom am niedrigsten gelegenen Wasserspeicher ist eine mit einer Pumpe versehene Rohrleitung zum am höchsten gelegenen Wasserspeicher geführt. Optional kann zudem vom am zweitniedrigsten gelegenen Wasserspeicher eine mit einer Pumpe versehene Rohrleitung zum am höchsten gelegenen Wasserspeicher führen. Auch in einer oder mehreren Fallrohrleitungen kann eine Pumpe vorgesehen sein, die nicht nur zur Förderung des Wassers in der Rohrleitung dient, sondern auch steuert, ob Wasser in der Rohrleitung fließt oder nicht. Alternativ können die Fallrohrleitungen auch keine Pumpe aufweisen, da Wasser allein aufgrund der Schwerkraft von einem zum nächsten Wasserspeicher fließen kann. Dann ist die Fallrohrleitung, wie bereits beschrieben, zweckmäßig mit einer Absperrungsvorrichtung versehen, um den Wasserfluss gezielt starten und stoppen zu können. Bevorzugt werden steuerbare Kugelhähne oder Ventile wie zum Beispiel Magnetventile eingesetzt, die über die Steuervorrichtung des Systems angesteuert und so geöffnet und geschlossen werden können. Steuerbare Kugelhähne sind aufgrund ihrer Zuverlässigkeit und geringen Wartungsanfälligkeit bevorzugt.

Um die Anzahl der Rohrleitungen im erfindungsgemäßen Niederschlagsmanagement-System gering zu halten, können Abschnitte des Leitungssystems zum Anschluss mehrerer Wasserspeicher gemeinsam verwendet werden. An ein oder beide Enden des gemeinsam verwendeten Leitungsabschnitts ist dann zweckmäßig ein Verteiler angeschlossen, der den gemeinsamen Abschnitt auf mehrere Rohrleitungen aufteilt. Konkret ist beispielsweise eine mit einem der Wasserspeicher verbundene Rohrleitung an einen Anschluss eines Verteilers angeschlossen, von dessen anderen Anschlüssen zwei Rohrleitungen abgehen, die mit je einem der anderen Wasserspeicher verbunden sind. Der Verteiler umfasst zweckmäßig Absperrvorrichtungen, mit denen die jeweiligen Rohrleitungs-Anschlüsse geöffnet oder verschlossen werden können, um die gewünschte Rohrleitung freizugeben und eine andere Rohrleitung, durch die kein Wasserfluss erfolgen soll, zu verschließen. Besonders bevorzugt weist der Verteiler dazu schaltbare Kugelhähne oder Ventile wie beispielsweise Magnetventile auf.

Die Steuerung des Wasserflusses im erfindungsgemäßen Niederschlagsmanagement-System erfolgt bevorzugt unter Berücksichtigung der Wasserstände in den drei Wasserspeichern und, falls vorhanden, bevorzugt auch der Wasserstände in den weiteren Wasserspeichern. Zweckmäßig ist dafür jedem der Wasserspeicher ein Wasserstandssensor zugeordnet, um den Wasserstand im Wasserspeicher zu ermitteln und das Ergebnis an die Steuervorrichtung zu übertragen. Diese Übertragung erfolgt dabei entweder kabelgebunden oder, bevorzugt, kabellos, insbesondere per Mobilfunk, wobei grundsätzlich jedoch jede Art kabelloser Übertragung möglich ist. Zu diesem Zweck ist der Steuervorrichtung ein Empfänger zugeordnet, der die kabellos übertragenen Messergebnisse - und auch sonstige kabellos übertragene Daten - empfängt und an die Steuervorrichtung weitergibt. Diese kann die übertragenen Daten entweder unmittelbar selbst verarbeiten oder ihrerseits an eine Computervorrichtung weitergeben, welche die Verarbeitung der Daten übernimmt. Die Übertragung kann erneut entweder kabelgebunden oder, bevorzugt, kabellos erfolgen. Das Vorgehen ist grundsätzlich bereits in der EP 3757300 A1 beschrieben. Für die kabellose Datenübertragung ist im System ein mit der Steuervorrichtung verbundener Sender vorhanden. Die Computervorrichtung befindet sich bevorzugt außerhalb des Retentionsdaches und kann auch die Computervorrichtung eines vom Betreiber des Niederschlagsmanagement-Systems verschiedenen Betreibers sein. Die Computervorrichtung errechnet mithilfe hinterlegter Rechenvorschriften, Vergleichsdaten und Sollwerte aus den übermittelten Daten Steuerparameter, die an die Steuervorrichtung des Systems zurückübermittelt und von dieser ausgeführt werden. Ist keine Computervorrichtung zusätzlich zur Steuervorrichtung vorhanden, werden die Steuerparameter in der Steuervorrichtung selbst errechnet. Unter Verwendung dieser Steuerparameter erfolgt dann die Steuerung des Wasserflusses im Niederschlagsmanagement-System. Beispielsweise steuert die Steuervorrichtung die wenigstens eine Pumpe - oder konkret ein die Stromversorgung der Pumpe steuerndes Relay - und wenigstens einen der Kugelhähne oder eines der Ventile an, welche die Rohrleitungen des Systems freigeben oder absperren.

Für die Steuerung des Wasserflusses weist das erfindungsgemäße Niederschlagsmanagement-System zweckmäßig wenigstens eine der folgenden Komponenten auf:
- wenigstens einen Temperatursensor zur Messung der Temperatur auf dem Retentionsdach,
- wenigstens einen Bodenfeuchtesensor zur Messung der Feuchtigkeit des Pflanzsubstrates im mehrschichtigen Aufbau des Retentionsdaches,
- eine Sende- und Empfangsvorrichtung zur drahtlosen Übertragung von Daten, insbesondere Sensordaten und/oder Wetterprognosedaten,
- wenigstens einen steuerbaren Dachabfluss, der in eine der Rohrleitungen einmündet,
- ein Ventil, insbesondere ein schaltbares Ventil, in einer als Fallleitung ausgebildeten Rohrleitung,
- einen Kugelhahn, insbesondere einen schaltbarer Kugelhahn, in einer als Fallleitung ausgebildeten Rohrleitung,
- eine Pumpe in einer als Fallleitung ausgebildeten Rohrleitung,
- eine auf dem Retentionsdach angeordnete Bewässerungsvorrichtung, welche insbesondere aus dem ersten Wasserspeicher mit Wasser versorgt werden kann,
- eine Computervorrichtung, welche vom Retentionsdach entfernt angeordnet ist und mit der Steuervorrichtung in Datenverbindung steht.

Das erfindungsgemäße Verfahren zum Betreiben eines erfindungsgemäßen Niederschlagsmanagement-Systems erfolgt, indem die Steuervorrichtung den Wasserfluss im Niederschlagsmanagement-System unter Berücksichtigung von Wetterprognosedaten und/oder Messergebnissen wenigstens eines der Sensoren steuert. In einer ersten Verfahrensvariante erfolgt die Steuerung unter Berücksichtigung der Wasserstände in erstem, zweitem und drittem Wasserspeicher. Ein Hauptaugenmerk der Steuerung ist dabei darauf gerichtet, durch Umverteilung des in den drei Wasserspeichern gespeicherten Wassers dafür zu sorgen, dass in keinem der Speicher so viel Wasser vorhanden ist, dass er überzulaufen droht. Konkret wird dies dadurch erreicht, dass für jeden der Wasserspeicher ein maximaler Wasserstand definiert und der entsprechende Wert in der Steuer- oder Computervorrichtung hinterlegt ist, sodass diese Maximalwerte bei der Steuerung berücksichtigt werden können. Nachfolgend wird die Steuerung unter der Annahme beschrieben, dass zum Niederschlagsmanagement-System eine Computervorrichtung gehört, in welcher alle Berechnungen ausgeführt werden. Die Beschreibung gilt jedoch analog für die Steuervorrichtung, wenn die Berechnungen in dieser erfolgen und keine Computervorrichtung vorhanden ist.

Die aktuellen Wasserstände in den Wasserspeichern werden mithilfe der Wasserstandssensoren ermittelt, die den drei Wasserspeichern zugeordnet sind. Bevorzugt handelt es sich bei diesen um kapazitive Wasserstandssensoren oder Ultraschallsensoren. Anhand der von den Wasserstandssensoren übermittelten Messergebnisse kann in der Computervorrichtung errechnet werden, wie viel Speichervolumen in jedem der Wasserspeicher noch zur Verfügung steht, bis der zulässige Maximalwasserstand erreicht ist. Stellt sich bei der Berechnung zum Beispiel heraus, dass in einem der Wasserspeicher der aktuelle Wasserstand dem Maximalwasserstand sehr nahekommt oder dieser bereits erreicht ist, kann ein Steuerbefehl ergehen, der dafür sorgt, dass diesem Wasserspeicher Wasser entnommen und auf wenigstens einen der beiden anderen Wasserspeicher umverteilt wird. Ob diese Umverteilung auf einen oder beide anderen Wasserspeicher erfolgt, wird zweckmäßig unter Berücksichtigung der jeweiligen aktuellen Wasserstände und damit der aktuell in beiden Wasserspeichern zur Verfügung stehenden Aufnahmekapazität berechnet. Entsprechend dem Ergebnis der Berechnung steuert die Steuervorrichtung dann wenigstens eine Pumpe und/oder wenigstens einen steuerbaren Dachabfluss, über welchen Wasser in das Rohrleitungssystem eingeleitet wird, und/oder wenigstens eine Absperrvorrichtung im Rohrleitungssystem an, welches die drei Wasserspeicher miteinander verbindet, und steuert den Wasserfluss zwischen den Wasserspeichern so und so lange, bis sich in diesen der errechnete Wasserstand eingestellt hat.

In einer bevorzugten Verfahrensvariante werden bei der Steuerung des Wasserflusses zusätzlich zu den Wasserständen der drei Wasserspeicher auch Wetterprognosedaten berücksichtigt. Konkret handelt es sich dabei um Daten, welche die bevorstehenden Niederschläge im Bereich des Einzugsgebietes des erfindungsgemäßen Niederschlagsmanagement-Systems prognostizieren. Diese bevorstehenden Niederschläge sollen und müssen im erfindungsgemäßen System aufgenommen werden. Das System wird darauf vorbereitet, indem in dem bevorzugt zur Aufnahme der Niederschläge vorgesehenen Wasserspeicher vorausschauend durch Umverteilung des gespeicherten Wassers aus diesem Speicher auf die übrigen Wasserspeicher Platz geschaffen wird. Welches der bevorzugte Speicher ist, in dem die bevorstehenden Niederschläge oder zumindest ein Großteil derselben aufgenommen werden soll, hängt einerseits vom Aufbau des Systems selbst und andererseits von der Menge der erwarteten Niederschläge ab. In der Regel und besonders in dem Fall, dass sehr starke Niederschläge prognostiziert werden, wird der bevorzugte Wasserspeicher ein Speicher mit großer Aufnahmekapazität und/oder ein Wasserspeicher sein, dem bei einer Reihenschaltung der Speicher frühzeitig Wasser zufließt. Durch Schaffen von Speicherkapazität im bevorzugten Wasserspeicher, bevor die prognostizierten Niederschläge zu fallen beginnen, kann sichergestellt werden, dass die Niederschläge sicher aufgenommen werden können. Grundsätzlich ermöglicht das erfindungsgemäße Niederschlagsmanagement-System auch eine Umverteilung des Wassers zwischen den verschiedenen Wasserspeichern, während die Niederschläge dem System bereits zufließen. Sind die Niederschläge jedoch sehr stark, kann es passieren, dass die Pumpen des Systems eine zu geringe Kapazität besitzen, um diese Umverteilung in dem geringen Zeitraum zu bewältigen, der zur Verfügung steht, um eine Überschreitung des Maximalwasserstandes in einem der Wasserspeicher zu verhindern. In diesem Fall bleibt dann nur ein unerwünschtes Ablassen von Wasser in die Kanalisation, um eine Flutung des Systems zu verhindern. Das erfindungsgemäße Niederschlagsmanagement-System und die vorausschauende Steuerung und Umverteilung von Wasser mittels des erfindungsgemäßen Verfahrens schaffen hier Abhilfe. Der Zeitraum, über den die Wetterprognosedaten in die Steuerung einbezogen werden, kann grundsätzlich beliebig gewählt werden. In der Regel ist eine Berücksichtigung der Niederschlagsdaten für den Folgetag ausreichend. Gegebenenfalls können aber auch zwei, drei oder mehr Tage in die vorausschauende Steuerung einbezogen werden.

Eine weitere Verfahrensvariante ermöglicht die Steuerung des Niederschlagsmanagement-Systems nicht nur während Niederschlagsperioden, sondern auch während Trockenperioden. Ein besonderes Augenmerk ist in diesen Zeiten darauf gerichtet, die Bepflanzung auf einem Gründach ausreichen mit Feuchtigkeit zu versorgen, um deren Überleben zu sichern. Häufig erfolgt die Bewässerung der Bepflanzung bei Retentionsdächern mittels Wasser, das in der wasserführenden Schicht des Daches gespeichert ist. Eine Möglichkeit hierfür besteht darin, mittels Kapillarvlies oder Kapillarsäulen Wasser aus der wasserführenden Schicht in das Pflanzsubstrat zu transportieren. Voraussetzung dafür ist allerdings, dass hinreichend Wasser in der wasserführenden Schicht vorhanden ist. Im erfindungsgemäßen Verfahren wird daher für die drei Wasserspeicher jeweils ein Mindestwasserstand vorgegeben und in der Computervorrichtung hinterlegt, der im Betrieb nicht unterschritten werden soll. Droht eine Unterschreitung dieses Mindestwasserstandes oder ist diese bereits eingetreten, steuert die Steuervorrichtung den Wasserfluss im System so, dass der Wasserstand in dem unterversorgten Wasserspeicher durch Zufuhr von Wasser aus einem Wasserspeicher, in dem ausreichend Wasser vorhanden ist, wieder angehoben wird. Ist bei mehr als einem Wasserspeicher zu wenig Wasser vorhanden, wird bevorzugt der erste Wasserspeicher - also die wasserführende Schicht des Retentionsdaches, wenn dieses eine Dachbegrünung trägt - aufgefüllt, um das Überleben der Bepflanzung zu sichern.

In einer Variante des erfindungsgemäßen Verfahrens ist die Steuervorrichtung ausgebildet, die Zufuhr von Wasser zu einer auf dem Retentionsdach installierten Bewässerungsvorrichtung zu veranlassen, wenn es Anzeichen dafür gibt, dass die auf dem Retentionsdach vorhandene Bepflanzung Wasser benötigt. Ein Indiz dafür kann sein, dass mittels eines Bodenfeuchtesensors festgestellt wird, dass die Bodenfeuchte des Pflanzsubstrates auf dem Retentionsdach unter einen festgesetzten Mindestwert fällt. Ein weiteres Kriterium für den Wasserbedarf der Bepflanzung kann eine hohe Temperatur im Bereich des Retentionsdaches sein. Misst ein Temperatursensor entweder einmalig oder über einen festgelegten Zeitraum mehrmals eine Temperatur, die über einem festgelegten Maximalwert liegt, kann entsprechend ein Bewässerungsvorgang ausgelöst werden. Weiterhin kann dies erfolgen, wenn über einen festgelegten Zeitraum kein Niederschlag gefallen oder ein festgelegter Zeitraum seit dem letzten Bewässerungsvorgang vergangen ist. Die Bewässerung kann grundsätzlich mit Wasser aus jedem der drei Wasserspeicher erfolgen. Am einfachsten und daher bevorzugt ist es jedoch, wenn Wasser zur Bewässerung aus der wasserführenden Schicht des Retentionsdaches (dem ersten Wasserspeicher) entnommen wird. Da die Speicherkapazität dieses Wasserspeichers jedoch vergleichsweise gering ist, sieht das erfindungsgemäße Verfahren in einer bevorzugten Variante vor, dass dem ersten Wasserspeicher, aus welchem das Wasser für die Bewässerung entnommen wurde, Wasser aus wenigstens einem der beiden anderen Wasserspeicher zugeführt wird, wenn während des Bewässerungsvorganges der Wasserstand unter den festgelegten Mindestwasserstand fällt.

### KURZE BESCHREIBUNG DER FIGUREN

Die Erfindung soll nachfolgend am Beispiel der beigefügten Zeichnungen näher erläutert werden. Die Zeichnungen sind rein schematischer Natur und nicht maßstabsgetreu. Sie dienen lediglich der Beschreibung bevorzugter Ausführungsformen der Erfindung, ohne dass diese auf die geschilderten Ausführungsformen beschränkt wäre. In den Figuren bezeichnen gleiche Bezugszeichen gleiche Gegenstände oder Teile, ohne dass jeweils alle Gegenstände oder Teile mit Bezugszeichen versehen sind.

In den Figuren zeigen:
- Fig. 1: ein Ausführungsbeispiel eines erfindungsgemäßen Niederschlagsmanagement-Systems in perspektivischer Ansicht;
- Fig. 2: eine Querschnittsansicht eines Dachaufbaus am Beispiel eines Dachbegrünungsaufbaus im Bereich eines Kontrollschachtes;
- Fig. 3 a)-h): verschiedene Verbindungsmöglichkeiten der Wasserspeicher des erfindungsgemäßen Niederschlagsmanagement-Systems;
- Fig. 4 a)-e): weitere Verbindungsmöglichkeiten der Wasserspeicher des erfindungsgemäßen Niederschlagsmanagement-Systems und
- Fig. 5: ein Schaubild zur Veranschaulichung des erfindungsgemäßen Verfahrens.

### DETAILLIERTE BESCHREIBUNG DER ERFINDUNG

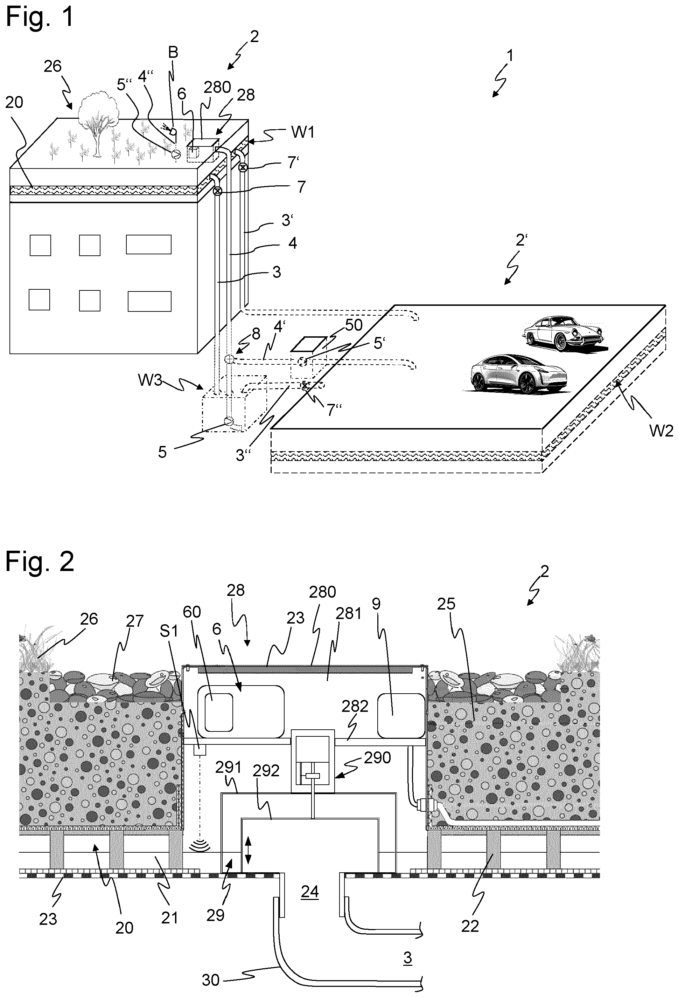

Figur 1 zeigt ein Ausführungsbeispiel eines erfindungsgemäßen Niederschlagsmanagement-Systems 1. Zu diesem gehört ein Retentionsdach 2, bei dem es sich um ein auf einem Bürogebäude angeordnetes Gründach handelt. Das Gründach weist einen mehrschichtigen Dachaufbau auf, wobei eine Schicht eine wasserführende Schicht 20 ist, die einen ersten Wasserspeicher W1 des Niederschlagsmanagement-Systems 1 bildet. Die Bepflanzung 26 des Gründaches kann mit Wasser aus der wasserführenden Schicht 20 bewässert werden. Dies kann in an sich bekannter Weise mithilfe von Kapillarsäulen oder Kapillarvlies erfolgen, die Wasser aus der wasserführenden Schicht in das Pflanzsubstrat transportieren. Zur Erhöhung der Bewässerungskapazität und des Verdunstungsanteils (vgl. EP 3757300 A1) ist hier eine Bewässerungsvorrichtung B vorhanden, der über eine Rohrleitung 4" mithilfe einer Pumpe 5" Wasser zugeführt werden kann. Im gezeigten Beispiel ist die Bewässerungsvorrichtung B als Wassersprenger dargestellt. Es könnte sich jedoch genauso gut um eine Bewässerungsvorrichtung mit Tropfschläuchen oder jedwede andere Art von Bewässerungsvorrichtung handeln. Die Bewässerungsvorgänge werden mittels einer Steuervorrichtung 6 gesteuert, welche die Pumpe 5" bzw. ein dieser zugeordnetes Relay für einen bestimmten Zeitraum ansteuert, um einen Bewässerungsvorgang auszulösen. Die Steuervorrichtung 6 ist in einem Kontrollschacht 28 angeordnet, der in den Schichtaufbau des Retentionsdaches 2 eingelassen ist. Durch Abnahme des Deckels 280 ist, beispielsweise zum Zweck der Wartung oder Reparatur, ein Zugang in den Innenraum des Kontrollschachtes möglich. Die Steuervorrichtung 6 arbeitet bei der Steuerung des Niederschlagsmanagement-Systems 1 mit einer hier nicht dargestellten, da entfernt vom Retentionsdach 2 aufgestellten Computervorrichtung zusammen, mit welcher sie in Datenverbindung steht. Im gezeigten Beispiel erfolgt die Datenübertragung kabellos, beispielsweise mittels Mobilfunks.

Zu dem Bürogebäude gehört eine Tiefgarage, deren Dach ebenfalls als Retentionsdach gestaltet ist. Es ist mit 2' bezeichnet und als Verkehrsdach mit begeh- und befahrbaren Flächen, hier insbesondere Parkflächen, ausgebildet. Der Aufbau des Retentionsdaches 2' ist ebenfalls mehrschichtig und umfasst eine wasserführende Schicht, welche einen zweiten Wasserspeicher W2 im Niederschlagsmanagement-System 1 bildet. Aufgrund der vergleichsweise großen Ausdehnung des Tiefgaragendaches 2' ist die Aufnahmekapazität des zweiten Wasserspeichers W2 groß. Der zweite Wasserspeicher W2 eignet sich daher besonders, selbst in längeren Trockenperioden noch ausreichend Wasser bereitzuhalten, das aus regenreicheren Zeiten noch dort gespeichert ist. Der zweite Wasserspeicher W2 nimmt einerseits Wasser auf, welches durch den Schichtaufbau des Retentionsdaches 2' hindurch in den zweiten Wasserspeicher W2 einsickert oder von den umliegenden Einzugsflächen in diesen Wasserspeicher gelangt. Zusätzlich führt vom ersten Retentionsdach 2 eine Rohrleitung 3' zum zweiten Retentionsdach 2'. Diese Rohrleitung 3' verbindet die Wasserspeicher W1 und W2. Sie ist als Fallleitung ausgebildet, sodass Wasser aus dem ersten Wasserspeicher W1 in den zweiten Wasserspeicher W2 eingeleitet werden kann. Mittels einer Absperrvorrichtung 7' kann der Wasserfluss in der Rohrleitung 3' gestoppt oder freigegeben werden. Bei der Absperrvorrichtung 7' handelt es sich - wie im Übrigen bei allen anderen in den Figuren gezeigten Absperrvorrichtungen - um eine steuerbare Absperrvorrichtung, die von der Steuervorrichtung 6 angesteuert und geöffnet und geschlossen werden kann. Bevorzugt ist die Absperrvorrichtung ein Kugelhahn. Die Steuervorrichtung 6 steuert also den Zufluss von Wasser aus dem ersten Wasserspeicher W1 in den zweiten Wasserspeicher W2.

Der Verlauf der Rohrleitung 3' - wie im Übrigen aller weiteren Rohrleitungen in den Zeichnungen - ist hier lediglich schematisch wiedergegeben und dient ausschließlich dem Zweck, anzuzeigen, welche Wasserspeicher miteinander verbunden sind und auf welche Weise diesen untereinander Wasser zugeführt werden kann. Es versteht sich von selbst, dass die wasserführenden Schichten der Retentionsdächer nicht bis an die Dachränder reichen und von außen nicht zu sehen sind. Entsprechend führen auch die Rohrleitungen nicht in der gezeigten Weise aus den Wasserspeichern heraus oder in diese hinein. Auch die Darstellung der Absperrvorrichtungen und Pumpen, die den Rohrleitungen zugeordnet sind, ist ausschließlich derart zu verstehen, dass an irgendeiner geeigneten Stelle in der Rohrleitung eine Absperrvorrichtung oder eine Pumpe vorhanden ist, um die Rohrleitung in an sich bekannter Weise entweder für den Durchfluss von Wasser zu sperren oder zu öffnen bzw. Wasser in der Rohrleitung zu fördern. Um Wasser ohne Verluste zwischen den Wasserspeichern W1, W2 und W3 fördern zu können, weisen die diese verbindenden Rohrleitungen jeweils eine geschlossene und wasserundurchlässige Rohrwandung auf.

Zusätzlich zu der Fallleitung 3' ist eine weitere Rohrleitung 4' vorhanden, welche den ersten Wasserspeicher W1 und den zweiten Wasserspeicher W2 miteinander verbindet. Die Rohrleitung 4' dient der Entnahme von Wasser aus dem zweiten Wasserspeicher W2, um dieses dem ersten Wasserspeicher W1 zuzuführen. Im gezeigten Beispiel mündet die unterirdisch verlegte Rohrleitung 4' in einen Verteiler 8, bei dem es sich um einen schaltbaren Y-Verteiler handelt, der erneut von der Steuervorrichtung 6 angesteuert werden kann, um gezielt einen der Rohranschlüsse freizugeben und dafür den anderen zu sperren. Dies kann beispielsweise mittels steuerbarer Kugelhähne erfolgen. Um Wasser aus der Rohrleitung 4' zum ersten Wasserspeicher W1 fördern zu können, steuert die Steuervorrichtung 6 den Verteiler 8 so an, dass dieser den Zufluss aus der Rohrleitung 4' in den vom Verteiler 8 nach oben verlaufenden Abschnitt der Rohrleitung 4 freigibt. Zum Fördern des Wassers aus dem zweiten Wasserspeicher W2 dient eine Pumpe 5'. Diese ist im gezeigten Beispiel in einem außerhalb des Retentionsdaches 2' angeordneten Pumpengehäuse 50 angeordnet, welches neben dem Retentionsdach 2' in den Boden eingelassen und mit einem bodenbündigen Deckel 50 verschlossen ist. Auf dem Retentionsdach 2 mündet die Rohrleitung 4 in den Kontrollschacht 28 ein. Dazu ist ein Endabschnitt der Rohrleitung durch eine Öffnung in einer Seitenwandung des Kontrollschachtes 28 hindurchgeführt. Der Kontrollschacht 28 ist nach unten offen, sodass das in seinen Innenraum eingeleitete Wasser durch den Kontrollschacht 28 hindurch in die wasserführende Schicht 20, also den ersten Wasserspeicher W1, gelangt.

Im Boden neben dem Bürogebäude ist eine Zisterne als dritter Wasserspeicher W3 eingegraben. Der dritte Wasserspeicher W3 liegt tiefer als die Böden der wasserführenden Schichten des ersten Wasserspeichers W1 und des zweiten Wasserspeichers W2. Die Zisterne wird durch Wasser aufgefüllt, welches vom Retentionsdach 2 aufgefangen und über eine Fallleitung 3 in die Zisterne W3 eingeleitet wird. Wie schon die Fallleitung 3' ist auch die Fallleitung 3 mittels eines steuerbaren Kugelhahns 7 absperrbar. Somit steuert die Steuervorrichtung 6 die Zufuhr von Wasser aus dem ersten Wasserspeicher W1 in den dritten Wasserspeicher W3. Weiterhin kann der dritte Wasserspeicher W3 mit Wasser aus dem zweiten Wasserspeicher W2 gespeist werden. Dies erfolgt über eine weitere Fallleitung 3", welche erneut mit einem steuerbaren Kugelhahn 7" gesperrt werden kann. Die Steuervorrichtung 6 steuert damit ebenfalls die Zufuhr von Wasser aus dem zweiten Wasserspeicher W2 in den dritten Wasserspeicher W3.

Aus der Zisterne, dem dritten Wasserspeicher W3, führt eine Rohrleitung 4 nach oben zur Erdbodenoberfläche. Sie ist an den Verteiler 8 angeschlossen. Die Steuervorrichtung 6 kann den Verteiler 8 so stellen, dass die Rohrleitung 4 durchgehend freigeschaltet und der Anschluss zur Rohrleitung 4' gesperrt wird. Dann kann Wasser mithilfe der im dritten Wasserspeicher W3 angeordneten Tauchpumpe 5 aus diesem in den Kontrollschacht 28 auf dem Retentionsdach 2 gepumpt werden und von dort dem ersten Wasserspeicher W1 zufließen, wie bereits für Wasser aus dem zweiten Wasserspeicher W2 beschrieben.

Insgesamt kann somit durch entsprechende Steuerung mithilfe der Steuervorrichtung 6 ein gezielter Wasserfluss zwischen den drei Wasserspeichern W1, W2 und W3 erzeugt werden. Im gezeigten Beispiel sind alle drei Wasserspeicher untereinander mittels einer mit einer Absperrvorrichtung versehenen Fallleitung oder einer mit einer Pumpe versehenen Druckleitung verbunden. Dies ermöglicht die direkte Wasserzufuhr vom ersten Wasserspeicher W1 zum zweiten Wasserspeicher W2 sowie zum dritten Wasserspeicher W3 über die Fallleitung 3 bzw. 3'. Weiterhin ist eine direkte Wassereinleitung über die Fallleitung 3" vom zweiten Wasserspeicher W2 in den dritten Wasserspeicher W3 möglich. Von letzterem kann Wasser über die Druckleitung 4 in den ersten Wasserspeicher W1 transportiert werden. Außerdem kann Wasser aus dem zweiten Wasserspeicher W2 über die Druckleitungen 4' und 4 zum ersten Wasserspeicher W1 gefördert werden. Lediglich eine direkte Verbindung zum Transport von Wasser aus dem dritten Wasserspeicher W3 in den zweiten Wasserspeicher W2 ist im Beispiel der Figur 1 nicht vorhanden. Selbstverständlich wäre es möglich, eine weitere Druckleitung aus dem dritten Wasserspeicher W3 in den zweiten Wasserspeicher W2 zu führen. Dazu müsste nicht einmal eine zusätzliche Pumpe vorgesehen sein, wenn an den Verteiler 8 eine weitere Druckleitung angeschlossen würde, welche zum zweiten Wasserspeicher W2 führt. Allerdings ist eine solche weitere Druckleitung im vorgesehenen Beispiel nicht erforderlich, da es auch ohne diese möglich ist, Wasser aus dem dritten Wasserspeicher W3 in den zweiten Wasserspeicher W2 zu transportieren. Dies geschieht dann allerdings nicht auf direktem Wege, sondern indirekt über den ersten Wasserspeicher W1. Es wird also zunächst Wasser aus dem dritten Wasserspeicher W3 über die Druckleitung 4 in den ersten Wasserspeicher W1 geleitet und von dort die gewünschte Menge Wasser über die Fallleitung 3' dem zweiten Wasserspeicher W2 zugeführt.

In gleicher Weise wäre es im Übrigen möglich, auch auf eine direkte Zufuhr von Wasser aus dem zweiten Wasserspeicher W2 in den ersten Wasserspeicher W1 zu verzichten. Konkret würde dies bedeuten, dass die Druckleitung 4', die Pumpe 5', das Pumpengehäuse 50 sowie der Verteiler 8 wegfallen würden. Die Wasserzufuhr aus dem zweiten Wasserspeicher W2 in den ersten Wasserspeicher W1 würde dann über den dritten Wasserspeicher W3 erfolgen, also über die Fallleitung 3" und die Druckleitung 4 in den Kontrollschacht 28 und von dort in den ersten Wasserspeicher W1.

Weiterhin ist es möglich, nicht nur in einer Druckleitung einen Verteiler zu verwenden, sondern auch in einer Fallleitung. Auf diese Weise könnte zum Beispiel eine der Fallleitungen 3 oder 3', welche vom höher gelegenen ersten Wasserspeicher W1 zu den tiefer gelegenen Wasserspeichern W2 und W3 führen, eingespart werden. Stattdessen könnte lediglich eine einzige Fallleitung, zum Beispiel die Fallleitung 3, vom Retentionsdach 2 herunterführen und in einen beispielsweise am Fuß des Bürogebäudes angeordneten Verteiler münden, der die Fallleitung auf zwei Rohrleitungen aufteilen würde, von denen eine zum zweiten Wasserspeicher W2 und die andere zum dritten Wasserspeicher W3 führte. Bei dem Verteiler könnte es sich wiederum um einen steuerbaren Verteiler handeln, der zum Beispiel nicht nur die Möglichkeit vorsieht, das durch die gemeinsame Fallleitung 3 fließende Wasser entweder dem zweiten Wasserspeicher W2 oder dem dritten Wasserspeicher W3 zuzuführen, sondern den Zufluss entsprechend vorgegebenen Anteilen auf beide Wasserspeicher aufzuteilen.

Die Fallleitung 3 kann beispielsweise mit einem Dachabfluss 24 verbunden sein, dem Wasser 21 aus dem ersten Wasserspeicher W1 und konkret der wasserführenden Schicht 20 zufließen kann, wie dies in Figur 2 dargestellt ist. Der Zufluss zum Dachabfluss 24 erfolgt dabei steuerbar, wie dies aus dem Stand der Technik grundsätzlich bereits bekannt und zum Beispiel in der EP 2982810 A1 und EP 3202995 A1 der Anmelderin beschrieben ist. Im in Figur 2 gezeigten Beispiel ist ein steuerbarer Verschluss 29 für den Dachabfluss 24 im Innenraum 281 des Kontrollschachtes 28 des Dachaufbaus des Retentionsdaches 2 angeordnet. Der Verschluss 29 umfasst einen zur Dachabdichtung 23 hin nach unten offenen hohlzylindrischen Verschlusskörper 292, der in einem ebenfalls nach unten offenen hohlzylindrischen Gehäuse 291 angeordnet ist. Das Gehäuse weist in einem unteren Bereich hier nicht sichtbare Öffnungen auf, durch welche Wasser 21 aus der wasserführenden Schicht 20 in das Innere des Gehäuses 291 eintreten kann. Solange der Verschlusskörper 292 abgesenkt ist, kann kein Wasser aus der wasserführenden Schicht 20 in den Dachabfluss 24 eintreten. Durch Betätigen der Hebevorrichtung 290 kann der Verschlusskörper 292 in einer Richtung senkrecht zur Dachabdichtung 23 auf und ab bewegt werden, wie dies mit dem Doppelpfeil angedeutet ist. Die Hebevorrichtung 290 ist von der Steuervorrichtung 6 steuerbar, welche ebenfalls im Innenraum 281 des Kontrollschachtes 28, konkret an einem Tragholm 282 befestigt, angeordnet ist. Weiterhin ist am Tragholm 282 ein Wasserstandssensor S1 befestigt, bei dem es sich im konkreten Beispiel um einen Ultraschallsensor handelt, der mittels Ultraschall den Wasserstand in der wasserführenden Schicht 20 ermittelt und die Messergebnisse per Funk, oder alternativ per Kabel, an die Sende- und Empfangseinheit 60 der Steuervorrichtung 6 übermittelt, von wo die Messwerte an eine externe Computervorrichtung übermittelt werden, in der die Auswertung der Messergebnisse sämtlicher Sensoren des Systems sowie die Berechnung der Steuerparameter erfolgt, welche dann über die Sende- und Empfangseinheit 60 zurück an die Steuervorrichtung gesandt werden, was erneut bevorzugt kabellos und insbesondere per Mobilfunk erfolgt. Sämtliche elektrischen Komponenten werden von der Stromversorgung 9 mit Strom versorgt.

Figur 2 zeigt weiterhin ein Beispiel eines geeigneten Schichtaufbaus des Retentionsdaches 2, welches hier ein begrüntes Dach ist. Dieser Schichtaufbau entspricht grundsätzlich dem, was aus dem Stand der Technik bekannt ist. Er soll daher hier nur kursorisch beschrieben werden. Auf die Dachabdichtung 23 ist zunächst eine hier nicht weiter bezeichnete Schutzschicht aufgelegt, wobei das Innere des Kontrollschachtes 281 weitgehend ausgespart ist, um einen Zugang zum Dachabfluss 24 und eine sichere Abdichtung desselben durch den steuerbaren Verschluss 29 zu gewährleisten. Außerhalb des Kontrollschachtes 28 ist auf die Schutzschicht ein Traggerüst 22 aufgestellt, das den Hohlraum der wasserführenden Schicht 20 definiert. Das Traggerüst 22 wird in an sich bekannter Weise von nebeneinander angeordneten kistenförmigen Bauteilen gebildet, die unter der Bezeichnung Wasserretentionsbox bekannt sind. Auf die obere Tragfläche des Traggerüstes 22 folgt eine (nicht bezeichnete) Vliesschicht, die das Eindringen von Schmutz und insbesondere von Teilen des auf der Vliesschicht angeordneten Pflanzsubstrats 25 in die wasserführende Schicht 20 verhindern soll. Das Pflanzsubstrat 25 trägt die Bepflanzung 26 der Dachbegrünung. Um den Kontrollschacht 28 herum ist anstelle der Bepflanzung eine Kiesschüttung 27 vorhanden.

Die Fallleitung 3, die an den Dachabfluss 24 angeschlossen ist und eine öffnungsfreie, wasserundurchlässige Rohrwandung 30 aufweist, kann entweder die einzige Rohrleitung sein, welche vom Retentionsdach 2 herunterführt und außerhalb des Daches, bevorzugt erst am Fuß des Gebäudes, auf dem sich das Retentionsdach 2 befindet, mittels eines Verteilers auf mehrere Rohrleitungen aufgeteilt wird. Alternativ ist es möglich, für jeden Wasserspeicher des erfindungsgemäßen Niederschlagsmanagement-Systems oder zumindest für einen Teil von dessen Wasserspeichern separate Rohrleitungen vorzusehen, die Wasser aus dem ersten Wasserspeicher W1, konkret Wasser 21 aus der wasserleitenden Schicht 20, zu dem entsprechenden Wasserspeicher transportieren. Zu diesem Zweck können dann mehrere Dachabflüsse 24 vorhanden sein, aus denen die Rohrleitungen mit Wasser aus dem ersten Wasserspeicher W1 versorgt werden.

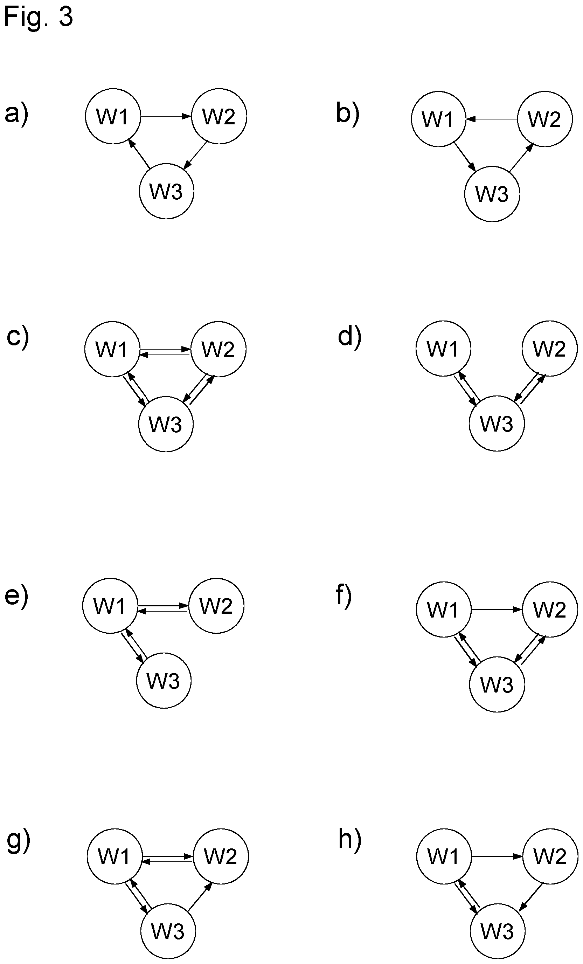

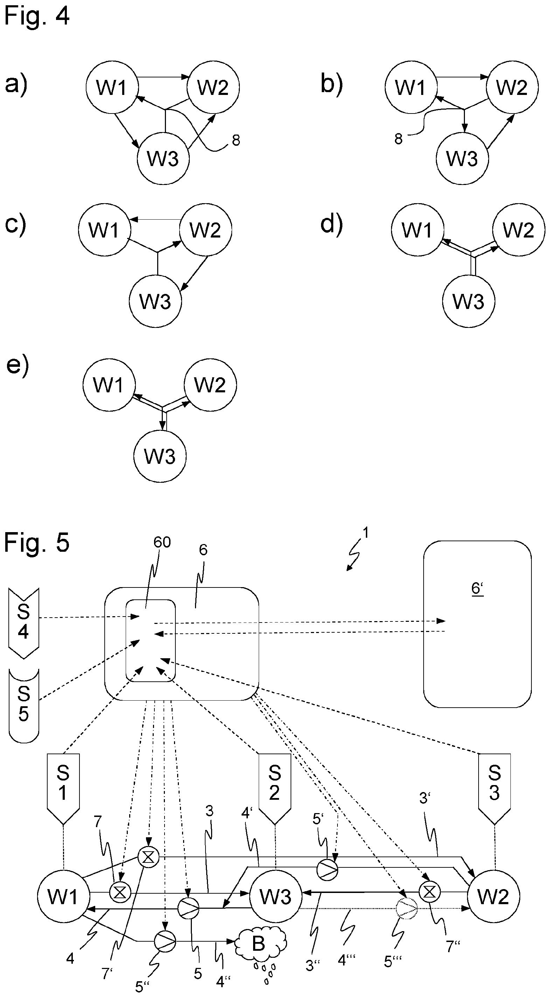

Figuren 3 und 4 veranschaulichen unterschiedliche beispielhafte Möglichkeiten, wie die drei Wasserspeicher des erfindungsgemäßen Niederschlagsmanagement-Systems untereinander mittels Rohrleitungen verbunden werden können, um jedem der Wasserspeicher W1, W2 und W3 direkt oder indirekt Wasser aus den beiden anderen Wasserspeichern zuführen zu können. Jeder Pfeil bezeichnet dabei eine Rohrleitung, bei der es sich entweder um eine Fallleitung handeln kann, bei der Wasser in Richtung des Pfeils allein aufgrund der Schwerkraft fließt, oder um eine Druckleitung, bei der Wasser mittels einer Pumpe in Pfeilrichtung gefördert wird. Ob die Rohrleitung eine Fallleitung oder eine Druckleitung ist, hängt offensichtlich in erster Linie davon ab, in welcher Höhe die Wasserspeicher W1, W2 und W3 zueinander angeordnet sind. Grundsätzlich können auch Fallleitungen als Druckleitungen mit einer Pumpe ausgebildet sein.

In Figuren 3 a) und b) sind die Wasserspeicher W1, W2 und W3 jeweils nur mit einer einzigen Rohrleitung zu einem Wasserkreislauf miteinander verbunden, wobei wenigstens eine der Rohrleitungen eine Druckleitung ist.

In Figur 3 c) sind sämtliche Wasserspeicher W1, W2 und W3 sowohl mittels einer Zuleitung als auch einer Ableitung miteinander verbunden. Dies ermöglicht einen direkten Wasserfluss von jedem der Wasserspeicher zu den beiden anderen Wasserspeichern des Systems.

In Figuren 3 d) und e) sind zwei der Wasserspeicher jeweils überhaupt nicht direkt durch eine Rohrleitung verbunden. Der Wasserfluss zwischen diesen nicht verbundenen Wasserspeichern (W1-W2 in Figur 3 d); W2-W3 in Figur 3 e)) erfolgt daher immer indirekt über den verbliebenen Wasserspeicher. Konkret sind im Fall der Figur 3 d) die Wasserspeicher W1 und W2 jeweils über eine Zu- und eine Ableitung mit dem Wasserspeicher W3 verbunden. Unter der Annahme, dass es sich wie in Figur 1 beim Wasserspeicher W3 um eine Zisterne handelt, kann letztere als Hauptspeicher und Wasserverteilzentrum des Niederschlagsmanagement-Systems dienen, welches Niederschläge von den Einzugsflächen des Systems aufnimmt und nach Bedarf direkt zu erstem und zweitem Wasserspeicher zurücktransportieren kann. Im Falle der Figur 3 e) ist der erste Wasserspeicher W1 über jeweils eine Zu- und Ableitung mit den Wasserspeichern W2 und W3 verbunden. Dies hat den Vorteil, dass Wasser aus dem relativ kleinen ersten Wasserspeicher W1, der die wasserführende Schicht des Retentionsdaches 2 und insbesondere eines Gründaches ist, im Falle starker Regenfälle sehr schnell den Wasserspeichern W2 und W3 zugeführt werden kann. Umgekehrt können letztere Wasserspeicher direkt den Wasserspeicher W1 mit Wasser versorgen, was besonders in Trockenperioden nützlich sein kann, wenn die Bepflanzung der Dachbegrünung einen hohen Wasserbedarf hat.

Die Anordnungen der Rohrleitungen in Figuren 3 f) und g) sind Weiterbildungen derjenigen der Figuren 3 d) und e), unterscheiden sich von diesen jedoch darin, dass nun alle Wasserspeicher über wenigstens eine Rohrleitung miteinander verbunden sind. Im Falle der Figur 3 f) kann Wasser aus dem ersten Wasserspeicher W1 zusätzlich direkt dem zweiten Wasserspeicher W2 zugeführt werden. Der dritte Wasserspeicher W3 kann erneut als Verteilerzentrum fungieren, welches mit den beiden übrigen Wasserspeichern jeweils sowohl über eine Zu- als auch eine Ableitung verbunden ist. Die Anordnung der Figur 3 g) basiert auf derjenigen der Figur 3 e), besitzt nun aber zusätzlich eine Zuleitung aus dem dritten Wasserspeicher W3 zum zweiten Wasserspeicher W2.

Die in Figur 3 h) dargestellte Anordnung ist eine Weiterbildung derjenigen der Figur 3 a), weist gegenüber dieser jedoch eine weitere Leitung auf, mit welcher Wasser aus dem ersten Wasserspeicher W1 direkt dem dritten Wasserspeicher W3 zugeführt werden kann. Dies ermöglicht beispielsweise die zügige Ableitung von Wasser im Falle starker Regenfälle aus der wasserführenden Schicht 20 des Retentionsdaches 2.

Figur 4 veranschaulicht Anordnungen von Rohrleitungen zwischen den drei Wasserspeichern W1, W2 und W3, welche sich eines Verteilers bedienen. Dies hat grundsätzlich den Vorteil, dass Rohrleitungen eingespart werden können, da sich die Verbindung eines der Wasserspeicher mit den beiden anderen eines gemeinsamen Stückes Rohrleitung auf dem Verbindungsweg bedient. Bei dem Verteiler handelt es sich zweckmäßig, wie bereits beschrieben, um einen schaltbaren Verteiler, beispielsweise einen Verteiler mit schaltbaren Kugelhähnen oder Magnetventilen, die mittels Steuersignalen aus der Steuervorrichtung 6 geschaltet werden können und dabei einen von zwei Verbindungswegen freigegeben und den anderen sperren oder, optional, auch beide Verbindungswege gleichzeitig freigeben können, wobei auch vorgegebene Durchflussanteile einstellbar sind.

Im Beispiel der Figur 4 a) sind direkte Zuleitungen aus dem ersten Wasserspeicher W1 zu den beiden anderen Wasserspeichern W2 und W3 vorhanden sowie eine direkte Zuleitung vom dritten Wasserspeicher W3 zum zweiten Wasserspeicher W2. Weiterhin verlassen Rohrleitungen den zweiten und dritten Wasserspeicher und münden in einen jeweiligen Anschluss eines Y-Verteilers 8, von dessen Ausgang eine einzige Rohrleitung zum ersten Wasserspeicher W1 führt.

In Figur 4 b) bestehen direkte Zuleitungen vom ersten und dritten Wasserspeicher zum zweiten Wasserspeicher W2. Dieser kann Wasser über eine Ableitung einem Verteiler 8 zuführen, von dem zwei Auslässe mit Rohrleitungen verbunden sind, die zum ersten und dritten Wasserspeicher (W1, W3) führen.

Figur 4 c) entspricht grundsätzlich Figur 4 b), jedoch sind die Fließrichtungen in den Rohrleitungen nun umgekehrt. Der Verteiler ist hier, wie auch in den nachfolgenden Figuren nicht mehr ausdrücklich beschriftet.

Die Beispiele der Figuren 4 d) und 4 e) umfassen zwei über jeweils einen Verteiler verbundene Rohrleitungssysteme. In Figur 4 d) entnimmt ein Rohrleitungssystem über je eine Rohrleitung Wasser aus dem zweiten und/oder dritten Wasserspeicher (W2, W3) und führt dies über einen Verteiler dem ersten Wasserspeicher W1 zu. Ein zweites Rohrleitungssystem entnimmt über je eine Rohrleitung Wasser aus dem ersten Wasserspeicher W1 und/oder dem dritten Wasserspeicher W3 und führt es dem zweiten Wasserspeicher W2 zu. In Figur 4 e) kann über eine Rohrleitung aus dem zweiten Wasserspeicher W2 Wasser entnommen und über einen Verteiler dem ersten Wasserspeicher W1 und/oder dem dritten Wasserspeicher W3 zugeleitet werden. Aus letzteren Wasserspeichern kann über je eine Rohrleitung Wasser entnommen und über einen Verteiler an den zweiten Wasserspeicher W2 geleitet werden.

Das Schaubild der Figur 5 soll stark vereinfacht eine beispielhafte Variante des erfindungsgemäßen Verfahrens zum Steuern eines erfindungsgemäßen Niederschlagsmanagement-Systems veranschaulichen. Im unteren Bereich der Figur sind die Wasserspeicher W1 bis W3 sowie die diese verbindenden Rohrleitungen dargestellt. Die Anordnung der Rohrleitungen entspricht dem, was auch in Figur 1 gezeigt ist. Zusätzlich ist als optionale Möglichkeit die auch bereits in Zusammenhang mit Figur 1 angesprochene direkte Verbindung zwischen dem dritten Wasserspeicher W3 und dem zweiten Wasserspeicher W2 punktiert dargestellt. Da die verschiedenen Rohrleitungen sowie die diesen zugeordneten Absperrvorrichtungen und Pumpen bereits in Zusammenhang mit Figur 1 beschrieben wurden, ist hier keine weitere Erläuterung erforderlich.

Jedem der Wasserspeicher W1, W2 und W3 ist ein Wasserstandssensor S1, S2 und S3 zugeordnet, welcher den Wasserstand im jeweiligen Wasserspeicher misst und das Messergebnis per Funk an die Sende- und Empfangseinheit 60, die in die Steuervorrichtung 6 integriert ist, übermittelt, was durch die gestrichelten Pfeile verdeutlicht werden soll. Weiterhin sind im System zwei Sensoren S4 und S5 vorhanden, die ebenfalls Messergebnisse an die Sende- und Empfangseinheit 60 per Funk übertragen. Konkret handelt es sich bei dem Sensor S4 um einen Temperatursensor, der auf dem Retentionsdach 2 aufgestellt ist und die Temperatur in der Umgebung des Retentionsdaches misst. Der Sensor S5 misst die Bodenfeuchte im Pflanzsubstrat 25. In der Sende- und Empfangseinheit 60, bei der es sich beispielsweise um ein Mobiltelefon handeln kann, kann zusätzlich eine Wetter-App installiert sein, welche Wetterdaten und insbesondere Wetterprognosedaten empfängt, die für den Standort des Systems relevant sind. Diese Wetter(prognose)daten werden ebenso wie die Messergebnisse der verschiedenen Sensoren an eine Computervorrichtung 6' übertragen, was vorzugsweise - wie mit den gestrichelten Pfeilen angedeutet - erneut per (Mobil)funk erfolgt. Alternativ können die Wetter(prognose)daten auch von der Computervorrichtung 6' eingesammelt und dort weiterverarbeitet werden.

Die Computervorrichtung 6' wertet in an sich bekannter Weise mittels eines geeigneten Programmes die empfangenen Messergebnisse und Daten aus und vergleicht diese mit in einem Speicher hinterlegten Sollwerten oder Sollwertbereichen. Entsprechen die ermittelten Werte den Sollwerten, ist in der Regel kein Eingriff in den Betrieb des Niederschlagsmanagement-Systems erforderlich. Weicht wenigstens einer der Messwerte von dem zugehörigen Sollwert ab, kann eine Eingreifen in den Betrieb des Systems notwendig werden. Die Computervorrichtung 6' errechnet dann geeignete Steuerparameter, die an die Steuervorrichtung 6 übertragen und in Steuerbefehle an die Aktoren des Systems (Pumpen, Absperrvorrichtungen, Verschlussvorrichtung für den Dachabfluss) umgewandelt werden. Alternativ können auch gleich Steuerbefehle von der Computervorrichtung 6' an die Steuervorrichtung 6 übertragen werden, die dann unmittelbar ausgeführt werden. Außerdem können in der Computervorrichtung 6' auch Messwert-unabhängige Routinen hinterlegt sein, die beispielsweise automatisiert zu bestimmen Zeiten ausgeführt werden. Dabei kann es sich um regelmäßige Bewässerungsvorgänge oder ähnliches handeln.

In einer ersten Verfahrensvariante erfolgt die Steuerung unter Berücksichtigung der Wasserstände in erstem, zweitem und drittem Wasserspeicher, die von den zugehörigen Wasserstandssensoren S1, S2 und S3 ermittelt wurden. Im Speicher der Computervorrichtung 6' ist für jeden der Wasserspeicher ein maximaler Wasserstand abgespeichert. Ergibt ein Vergleich des gemessenen aktuellen Wasserstandes mit dem jeweils hinterlegten maximalen Wasserstand eine Abweichung, errechnet die Computervorrichtung 6' aus Soll- und Istwert sowie den bekannten Abmessungen des Wasserspeichers die Menge an Wasser, die aus dem Wasserspeicher abgelassen werden muss, damit der Wasserstand auf mindestens den maximalen Wasserstand reduziert wird. Bevorzugt wird dieses abzulassende Volumen in eine Zeitdauer umgerechnet, während welcher der Verschluss des Dachabflusses oder die Absperrvorrichtung in einer aus dem Wasserspeicher herausführenden Fallleitung geöffnet werden muss, um dieses Volumen aus dem Wasserspeicher abzulassen. Muss das Wasser über eine Druckleitung mittels einer Pumpe aus dem Wasserspeicher entfernt werden, wird alternativ die Zeitdauer errechnet, während welcher die Pumpe betrieben werden muss, um das errechnete Volumen aus dem Wasserspeicher zu entfernen. Zusätzlich ermittelt die Computervorrichtung 6', in welcher Weise das abzulassende Volumen an Wasser am besten auf die beiden anderen Wasserspeicher aufgeteilt werden kann. Dabei werden die aktuellen Wasserstände der beiden anderen Wasserspeicher sowie deren maximale Wasserstände berücksichtigt. Sollte sinnvollerweise eine Aufteilung des abzulassenden Wasservolumens auf die beiden übrigen Wasserspeicher erfolgen, wird entsprechend nicht nur für eine, sondern für alle an der Umverteilung beteiligten Rohrleitungen errechnet, welches Volumen durch sie hindurch gefördert werden muss, und entsprechend werden die Öffnungszeit des Dachabfluss-Verschlusses oder der Absperrvorrichtung in der Rohrleitung bzw. die Betriebszeit der Pumpe ermittelt. Die so errechneten Steuerparameter bzw. Steuerbefehle werden an die Steuervorrichtung 6 übertragen, von dieser an die Aktoren übertragen und dort ausgeführt.

In einer Weiterbildung werden bei der Steuerung des Wasserflusses zusätzlich zu den Wasserständen der drei Wasserspeicher auch Wetterprognosedaten berücksichtigt. Kündigen die Wetterprognosedaten bevorstehende Mengen an Niederschlägen an, die dazu führen könnten, dass einer oder mehrere der Wasserspeicher des Systems diese Niederschläge nicht aufnehmen können, kann eine Umverteilung von Wasser zwischen den drei Wasserspeichern des Systems hier häufig Abhilfe schaffen. In aller Regel werden die drei Wasserspeicher verschiedene Aufnahmekapazitäten besitzen. Durch Umverteilung von Wasser aus wenigstens einem der kleineren Wasserspeicher in wenigstens einen größeren kann anschließend auch in dem kleineren Wasserspeicher wieder ausreichend Platz vorhanden sein, um auch stärkere Niederschläge aufnehmen zu können. Vermeldet die Wetterprognose also für den Folgetag oder gegebenenfalls für zwei oder drei Folgetage stärkere Niederschläge, errechnet die Computervorrichtung 6', welche Niederschlagsmengen in diesem Fall den Wasserspeichern W1, W2 und W3 zufließen würden. Unter Berücksichtigung der von den Sensoren S1, S2 und S3 ermittelten aktuellen Wasserstände in diesen Wasserspeichern ermittelt die Computervorrichtung 6' weiterhin, ob diese Niederschlagsmengen in den Wasserspeichern W1, W2 und W3 aufgenommen werden können. Dabei wird zweckmäßig eine Sicherheitsmarge eingerechnet für den Fall, dass die Niederschläge stärker als prognostiziert ausfallen. Ergibt die Berechnung, dass die Speicherkapazität wenigstens eines der Wasserspeicher nicht ausreichend ist, errechnet die Computervorrichtung 6', wie vorstehend bereits beschrieben, wieviel Wasser aus diesem Wasserspeicher abgelassen werden muss, damit die Speicherkapazität ausreicht, die erwarteten Niederschlagsmenge aufzunehmen. Die Umverteilung des Wassers erfolgt dann wie bereits vorstehend beschrieben.

Mittels des erfindungsgemäßen Verfahrens ist auch eine Steuerung des Niederschlagsmanagement-Systems während einer Trockenperiode vorgesehen. Diese kann in einer Variante ebenfalls mithilfe der Wasserstandssensoren S1 bis S3 festgestellt werden, da bei längerer Trockenheit die Wasserstände in den Wasserspeichern W1 bis W3 absinken. Sinkende Wasserstände in den Wasserspeichern können von der Computervorrichtung 6' also als Anzeichen für eine Trockenperiode gewertet werden. Zusätzlich oder alternativ kann mittels des Bodenfeuchtesensors S5 die Feuchtigkeit des Pflanzsubstrates 25 ermittelt werden. Eine hohe, vom Temperatursensor S4 festgestellte Temperatur kann ebenfalls ein Anzeichen für eine Trockenperiode sein. Bevorzugt werden mehrere der vorstehenden Parameter ermittelt und die erhaltenen Messergebnisse an die Computervorrichtung 6' transferiert. Ergibt die Auswertung dieser Ergebnisse für die Computervorrichtung 6', dass eine Trockenperiode vorliegt, wird daraus die Schlussfolgerung gezogen, dass eine intensivere Bewässerung erfolgen muss. Für jeden Bewässerungsvorgang kann grundsätzlich eine feste Menge an Wasser vorgegeben sein, welches mittels der Bewässerungsvorrichtung B an das Pflanzsubstrat 25 abgegeben wird. Alternativ ist es möglich, abhängig vom Grad der Trockenheit unterschiedliche Wassermengen auf das Pflanzsubstrat 25 auszubringen. Dies erfolgt konkret, indem entsprechend den von der Computervorrichtung 6' ermittelten Steuerparametern von der Steuervorrichtung 6 ein Steuerbefehl an die Pumpe 5" ausgegeben wird, aufgrund dessen die Pumpe über einen vorgegebenen Zeitraum ihren Betrieb aufnimmt und über die Rohrleitung 4" Wasser aus dem ersten Wasserspeicher W1 zur Bewässerungsvorrichtung B transportiert.

Übermittelt der Sensor S1 während oder nach einem Bewässerungsvorgang einen Messwert für den Wasserstand im ersten Wasserspeicher W1, der unterhalb eines festgelegten minimalen Wasserstandes liegt, reagiert die Computervorrichtung 6' darauf damit, dass sie die Auffüllung des ersten Wasserspeichers W1 mit Wasser aus dem zweiten Wasserspeicher W2 und/oder dem dritten Wasserspeicher W3 veranlasst. Dazu wird, wie bereits vorstehend grundsätzlich beschrieben, errechnet, welche Menge an Wasser erforderlich ist, um den Wasserstand im ersten Wasserspeicher auf zumindest den minimalen Wasserstand zu erhöhen. Unter der Annahme, dass im vorliegenden Fall die Auffüllung mit Wasser aus dem dritten Wasserspeicher W3 erfolgen soll, wird eine Zeitdauer errechnet, während welcher die Pumpe 5 betrieben werden muss, um die erforderliche Wassermenge durch die Leitung 4 zum ersten Wasserspeicher W1 zu fördern. Das Ergebnis der Berechnung wird von der Computervorrichtung 6' an die Steuervorrichtung 6 übermittelt, welche ihrerseits einen entsprechenden Steuerbefehl an die Pumpe 5 weiterleitet, wie mit der strichpunktierten Linie in Figur 5 verdeutlicht werden soll.

Nebenbei sei angemerkt, dass alle Strichpunktlinien in dieser Figur Steuerbefehle darstellen, welche von der Steuervorrichtung 6 an die einzelnen Aktoren des Systems gesandt werden können. Das erfindungsgemäße Niederschlagsmanagement-System und das Verfahren, mit welchem dieses gesteuert werden kann, eröffnen somit eine Vielzahl von Möglichkeiten der Steuerung und insbesondere der vorausschauenden Steuerung des Wasserflusses im System. Auf diese Weise ist es möglich, das System so zu betreiben, dass Wasser nur noch in extremen Ausnahmefällen in die Kanalisation eingeleitet werden muss und Wasserverluste aus dem System auf Verdunstungsverluste beschränkt werden können. Während hier hauptsächlich Systeme mit drei Wasserspeichern beschrieben wurde, kann die Erfindung in analoger Weise auch auf Systeme mit mehr als drei Wasserspeichern angewendet werden.

### BEZUGSZEICHENLISTE

- 1: Niederschlagsmanagement-System
- 2, 2': Retentionsdach
- 20: wasserführende Schicht
- 21: Wasser
- 22: Traggerüst
- 23: Dachabdichtung
- 24: Dachabfluss
- 25: Pflanzsubstrat
- 26: Bepflanzung
- 27: Kiesschüttung
- 28: Kontrollschacht
- 280: Deckel
- 281: Innenraum von 28
- 282: Tragholm
- 29: Steuerbarer Verschluss von 24
- 290: Hebevorrichtung
- 291: Gehäuse
- 292: Verschlusskörper
- 3, 3', 3": Rohrleitung (Fallleitung)
- 30: Rohrwandung
- 4, 4', 4": Rohrleitung (Druckleitung)
- 5, 5', 5": Pumpe
- 50: Pumpengehäuse
- 6, 6': Steuervorrichtung, Computervorrichtung
- 60: Sende- und Empfangseinheit
- 7, 7', 7": Schaltbare Absperrvorrichtung (z. B. Kugelhahn oder Ventil)
- 8: Verteiler
- 9: Stromversorgung
- B: Bewässerungsvorrichtung
- S1, S2, S3: Wasserstandssensor
- S4: Temperatursensor
- S5: Bodenfeuchtesensor
- W1: Erster Wasserspeicher
- W2: Zweiter Wasserspeicher
- W3: Dritter Wasserspeicher

## Patentansprüche

1. Niederschlagsmanagement-System (1), umfassend
- einen ersten, zweiten und dritten Wasserspeicher (W1, W2, W3),
- ein Retentionsdach (2), das einen mehrschichtigen Aufbau aufweist, wobei eine der Schichten eine wasserführende Schicht (20) ist, welche den ersten Wasserspeicher (W1) bildet,
- Rohrleitungen (3, 4) mit einer geschlossenen Rohrwandung (30), welche die drei Wasserspeicher (W1, W2, W3) derart miteinander verbinden, dass Wasser aus jedem der drei Wasserspeicher (W1, W2, W3) über die jeweiligen Rohrleitungen (3, 4) den jeweiligen beiden anderen Wasserspeichern zugeführt werden kann,
- wenigstens eine Pumpe (5, 5', 5"), welche dazu angeordnet und ausgebildet ist, Wasser durch wenigstens eine der Rohrleitungen (3, 4) zu pumpen, sowie
- eine Steuervorrichtung (6) zum Steuern des Wasserflusses im Niederschlagsmanagement-System (1).

2. Niederschlagsmanagement-System nach Anspruch 1,
worin die drei Wasserspeicher (W1, W2, W3) in Reihe über je eine Rohrleitung (3, 3', 3") miteinander verbunden sind, sodass Wasser aus dem ersten Wasserspeicher (W1) über den zweiten Wasserspeicher (W2) in den dritten Wasserspeicher (W3) gelangen kann, und
worin eine mit einer Pumpe (5) versehene Rohrleitung (4) vom dritten Wasserspeicher (W3) zum ersten Wasserspeicher (W1) geführt ist.

3. Niederschlagsmanagement-System nach Anspruch 1 oder 2,
worin erster, zweiter und dritter Wasserspeicher (W1, W2, W3) auf unterschiedlichen Höhen zueinander angeordnet sind, wobei
a) der am höchsten gelegene Wasserspeicher (W1) über eine erste Rohrleitung (3') mit dem nächstniedrigeren Wasserspeicher (W2) und dieser mit dem am niedrigsten gelegenen Wasserspeicher (W3) über eine zweite Rohrleitung (3") verbunden ist, wobei optional der am höchsten gelegene Wasserspeicher (W1) über eine dritte Rohrleitung (3) mit dem am niedrigsten gelegenen Wasserspeicher (W3) verbunden ist, und
b) vom am niedrigsten gelegenen Wasserspeicher (W3) eine mit einer Pumpe (5) versehene Rohrleitung (3) zum am höchsten gelegenen Wasserspeicher (W1) geführt ist und optional vom am zweitniedrigsten gelegenen Wasserspeicher (W2) eine mit einer Pumpe (5') versehene Rohrleitung (3) zum am höchsten gelegenen Wasserspeicher (W1) geführt ist.

4. Niederschlagsmanagement-System nach Anspruch 1,
worin eine mit einem der Wasserspeicher (W1) verbundene Rohrleitung (4) an einen Anschluss eines Verteilers (8) angeschlossen ist, von dessen anderen Anschlüssen zwei Rohrleitungen abgehen, die mit je einem der anderen Wasserspeicher (W2, W3) verbunden sind, wobei der Verteiler optional schaltbare Absperrvorrichtungen, bevorzugt schaltbare Kugelhähne oder Ventile und insbesondere Magnetventile, aufweist.

5. Niederschlagsmanagement-System nach einem der Ansprüche 1 bis 4,
worin jedem der Wasserspeicher (W1, W2, W3) ein Wasserstandssensor (S1, S2, S3) zugeordnet ist, um den Wasserstand im Wasserspeicher zu ermitteln und das Ergebnis an die Steuervorrichtung (6) zu übertragen.

6. Niederschlagsmanagement-System nach einem der Ansprüche 1 bis 5,
welches wenigstens eine der folgenden Komponenten umfasst:
- wenigstens einen Temperatursensor (S4) zur Messung der Temperatur auf dem Retentionsdach (2),
- wenigstens einen Bodenfeuchtesensor (S5) zur Messung der Feuchtigkeit des Pflanzsubstrates im mehrschichtigen Aufbau des Retentionsdaches (2),
- eine Sende- und Empfangsvorrichtung (60) zur drahtlosen Übertragung von Daten, insbesondere Sensordaten und/oder Wetterprognosedaten,
- wenigstens einen steuerbaren Dachabfluss (24), der in eine der Rohrleitungen (3) einmündet,
- ein Ventil (7, 7', 7"), insbesondere ein schaltbares Ventil, in einer als Fallleitung ausgebildeten Rohrleitung (3, 3', 3"),
- einen Kugelhahn, insbesondere einen schaltbarer Kugelhahn, in einer als Fallleitung ausgebildeten Rohrleitung,
- eine Pumpe in einer als Fallleitung ausgebildeten Rohrleitung,
- eine auf dem Retentionsdach (2) angeordnete Bewässerungsvorrichtung (B), welche insbesondere aus dem ersten Wasserspeicher (W1) mit Wasser versorgt werden kann,
- eine Computervorrichtung (6'), welche vom Retentionsdach (2) entfernt angeordnet ist und mit der Steuervorrichtung (6) in Datenverbindung steht.

7. Niederschlagsmanagement-System nach einem der vorhergehenden Ansprüche,
worin der zweite Wasserspeicher (W2) eine wasserführende Schicht eines weiteren Retentionsdaches (2') ist, bevorzugt eines tiefer als das den ersten Wasserspeicher (W1) aufweisende Retentionsdach (2) gelegenen Retentionsdaches, insbesondere eines Tiefgaragendaches, und/oder der dritte Wasserspeicher (W3) eine Zisterne ist, bevorzugt eine in den Boden eingelassene Zisterne, deren Bodenfläche unterhalb des Bodens des zweiten Wasserspeichers (W2) liegt.

8. Verfahren zum Betreiben eines Niederschlagsmanagement-Systems (1) nach einem der vorhergehenden Ansprüche,
worin die Steuervorrichtung (6) den Wasserfluss im Niederschlagsmanagement-System (1) unter Berücksichtigung von Wetterprognosedaten und/oder Messergebnissen wenigstens eines der Sensoren (S1 bis S5) steuert.

9. Verfahren nach Anspruch 8,
worin die Steuervorrichtung (6) die wenigstens eine Pumpe (5, 5', 5") und/oder wenigstens eine der Absperrvorrichtungen (7, 7', 7") und/oder den wenigstens einen steuerbaren Dachabfluss (24) so steuert, dass Wasser im Niederschlagsmanagement-Systems (1) entsprechend wenigstens einem der folgenden Kriterien auf die drei Wasserspeicher (W1, W2, W3) verteilt wird:
- in allen drei Wasserspeichern (W1, W2, W3) wird ein jeweils vorgegebener Mindestwasserstand nicht unterschritten,
- in allen drei Wasserspeichern (W1, W2, W3) wird ein jeweils vorgegebener Maximalwasserstand nicht überschritten,
- in allen drei Wasserspeichern (W1, W2, W3) wird ein jeweils vorgegebener Maximalwasserstand auch dann nicht überschritten, wenn zu dem aktuellen Wasserstand die aufgrund von Wetterprognosedaten für eine vorgegebene Anzahl von Tagen, bevorzugt ein bis drei Tagen, zu erwartenden Zuflüsse zum Niederschlagsmanagement-Systems (1) hinzugerechnet werden.

10. Verfahren nach Anspruch 8 oder 9,
worin die Steuervorrichtung (6) die Zufuhr von Wasser zu einer auf dem Retentionsdach (2) installierten Bewässerungsvorrichtung (B) veranlasst, wenn wenigstens eines der folgenden Kriterien erfüllt ist:
- ein Bodenfeuchtesensor (S5) misst eine Bodenfeuchte des Pflanzsubstrates (25) auf dem Retentionsdach (2), die unter einen festgesetzten Mindestwert fällt,
- ein Temperatursensor (S4) misst entweder einmalig oder über einen festgelegten Zeitraum mehrmals eine Temperatur, die über einem festgelegten Maximalwert liegt,
- über einen festgelegten Zeitraum ist kein Niederschlag gefallen,
- ein festgelegter Zeitraum seit dem letzten Bewässerungsvorgang ist vergangen,
wobei das der Bewässerungsvorrichtung (B) zugeführte Wasser aus einem der drei Wasserspeicher (W1, W2, W3) und bevorzugt aus dem ersten Wasserspeicher (W1) entnommen wird, wobei optional, wenn dabei während des Bewässerungsvorganges der Wasserstand unter einen festgelegten Mindestwasserstand fällt, dem Wasserspeicher (W1), aus welchem das Wasser für die Bewässerung entnommen wurde, Wasser aus wenigstens einem der beiden anderen Wasserspeicher (W2, W3) zugeführt wird.
